# EUROPEAN PATENT SPECIFICATION

(11) **EP 1 920 867 B1**
(45) Date of publication and mention of the grant of the patent: **12.09.2018**
(21) Application number: 07021623.9
(22) Date of filing: 07.11.2007
(51) Int. Cl.: E01B 29/46, B23K 11/04, B23K 101/26

(54) **Method and device for welding rails**
Verfahren und Vorrichtung zum Schweißen von Schienen
Procédé et dispositif de soudage de rails

(30) Priority: 07.11.2006 NL 1032827
(43) Date of publication of application: 14.05.2008
(73) Proprietor: VolkerRail Nederland BV, 4131 NJ Vianen (NL)
(72) Inventor: Van Buuren, Henrie, 4131 NJ Vianen (NL)
(74) Representative: Assendelft, Jacobus H.W.

(56) References cited:
- EP-A- 1 223 247
- EP-A1- 0 326 794
- US-A1- 2006 219 123

## Description

The invention relates to welding rails of railway tracks for train, streetcar or subway, particularly mounting a fitting piece or making a closing weld, with securing the stress free temperature. The invention is applicable to continuous welded track.

With the invention use is preferably made of butt welding.

To be able to guarantee the stress free condition, the invention offers the method according to claim 1 and the device according to claim 8. This is different from the closest prior art disclosed in US-A-2006219123.
Assuming that the rail has a stress free condition prior to severing (at a norm temperature, e.g. 25 degrees Celsius, the rail is stress free), in this way it is known at what stress the rail has to be brought after welding to be able to guarantee the stress free condition.

A property deducted from the mechanical stress is e.g. the tension or compression in the rail.

According to a preferred embodiment, prior to severing the rail, a sensor of a measuring device is mounted to both sides of the rail (preferably at a short distance of it) such that the sensor can not displace relative the rail. The measuring device is designed to detect the displacement of the sensors. During severing of the rail the sensors will move away from each other, which is detected by the measuring device.

According to an alternative the measuring device is designed to maintain the sensors during severing of the rail at a fixed mutual distance while the required force is detected, e.g. by means of a strain gauge or a pressure gauge if the sensors are kept at a fixed mutual distance by means of a hydraulic ram. Also from this detection the stress acting in the rail can be measured.

Preferably account is made of changing environmental conditions, such as the temperature, during determining the stress free condition. E.g. the temperature, e.g. of the rail close to the cut, is detected at the beginning of the activities, when the mechanical stress (or a property dependent of that) is determined in the, preferably still continuous, rail. This is compared with the temperature, e.g. of the rail at approximately the same location, at the time the butt weld is made. If a difference is detected, possibly above a pre determined threshold value, the procedure is adapted correspondingly.

Preferably prior to determining the stress in the rail (thus e.g. prior to severing), the rail is over a pre determined length part disassembled from its mounting to the foundation, e.g. the sleepers. This length part preferably contains the cut and/or another cut (that will be made in the future) and is preferably the length part that has to be disassembled for the (maintenance) work. Thus the rail mounting has no negative influence to the procedure to guarantee the stress free condition. The length part equals e.g. the length part that must be lifted to make the butt weld, or temporarily must be given a curved shape, such as discussed later.

When a new rail piece is added to replace an existing rail piece, it is preferred to give a part of the rail temporarily a curved shape, e.g. without or with minimal plastic deformation. Said part preferably belongs to the existing rail. The curved part preferably remains flat lying, i.e. the rail is moved aside, preferably exclusively to one side, e.g. facing the adjacent rail of the same track. Preferably the part is **bend** such that the ends of the curved part smoothly connect to the (straight) line according to the original shape of the rail. From the line according to the original shape of the rail, the curved part has e.g. first a convex curved part, subsequently a concave curved part and then again a convex curved part that reconnects to the line further downstream.

Use of such curved part offers advantages when a fitting piece is added. Such rail piece is typically between about 6 and 9 metres long and is mounted at both its ends to the existing track by a butt weld to replace an existing rail piece. For butt welding, the fitting piece has at both its ends an oversized length of typically 3 cm compared to the rail piece to be replaced (different from dimensional changes due to the stress free condition and making the required cuts). By giving one or both pieces existing rail (that will be welded to the fitting piece) temporarily a curved shape, the fitting piece can, despite its oversized length, be located between the rail ends without being deformed (different from a possible curve corresponding to the local curvature in e.g. a curve). During butt welding the additional length is consumed and the curved rail piece brought back in the original shape automatically.

The butt weld device **of claim 8,** or its auxiliary equipment can have a display device to inform the operator that the stress free condition is obtained. This can be an analogue clock with a single, turning pointer and multiple scales such that a single clock is adapted for different rail types (vignola rail, heavy rails, etc). An alternative is a digital clock. Or an acoustic or light signal, e.g. a green or red lamp.

The butt weld device **of claim 8** preferably has a first clamping unit and a second clamping unit. Both clamping units are designed to engage the rail at both sides of the butt weld and to press the rail ends to be welded with pre determined force against each other. The first clamping unit is preferably designed to engage the rail ends at a short distance from the butt weld, compared to the second clamping unit. Thus the engaging locations of the first clamping unit at the rail are present between those of the second clamping unit. The first clamping unit is preferably associated with the provisions to create a welding arc for butt welding, and preferably provides with that a first module. The second clamping unit is preferably designed to provide a higher force to push the rail ends against each other, compared to the second clamping unit, and is preferably part of a second module. Preferably the first and second clamping unit are provided with a master slave control, wherein the first clamping unit provides the master. The first and second clamping unit are preferably hydraulically powered for the required displacement force for the rail ends and are preferably displacement controlled.

With this butt weld device one operates as follows: First the first clamping unit is engaged, with which the rail ends to be welded are pulled towards each other by elastic elongation to create the arc. While the first clamping unit remains in place, the second clamping unit is engaged. In the control unit the data are entered to guarantee the stress free condition. During warming up by the arc the second clamping unit remains switched off. When the desired temperature is reached, the control unit commands the first clamping unit to push the rails against each other while guaranteeing the stress free condition. If a control unit lacks the operator provides the desired control. Compared to the warming up phase more force must be provided. If the first clamping unit detects that this force requirement is beyond its maximum, the first clamping unit commands the second clamping unit to become active.

In an alternative a master slave control is absent. E.g. the first clamping unit is merely used during warming up and the second clamping unit is always used to press the rail ends against each other and keep them pressed until the weld is cooled.

While the weld cools the first clamping unit can be removed, e.g. to be used to make the next weld joint.

Alternatively, after the rail is severed, according to the invention the ends of the cut can be brought back to their original location (i.e. the location prior to severing) wherein the required force is a measure for or is substantially equal to the prevailing stress free condition of the rail prior to being cut.

The fitting piece can possibly have a length between 3 and 24 metre.

The invention **can be embodied by** a vehicle for running across both a railway and a motorway, with a dedicated propulsion, a drivers cabin, a carriage with a first set of wheels for running across the road and a second set of wheels for running across a railway track, wherein said sets can be used alternatively, and a frame bearing a housing to contain, protected against the weather, equipment, materials etc. for e.g. providing a fitting piece or a closing weld joint, and relative to the driving direction in front or behind a to the frame mounted, hydraulically driven articulated arm or boom as lifting device with a lifting element, such as hook, at the free end to lift equipment in and out the housing and onto and from the ground. The boom is preferably pivotably around an upstanding, e.g. substantially vertical axis. The boom preferably has a telescoping or in a different manner extendible part, preferably hydraulically. The boom preferably has at least two in mutual extension provided parts that can mutually pivot around a first horizontal axis, preferably hydraulically, and which together can pivot around a second horizontal axis at a distance from the first, preferably hydraulically. This boom is alternatively mounted to the frame of a lorry.

In an alternative the boom is part of a typical excavating machine, e.g. made by Atlas. It has a carriage with two at a fixed level mounted shafts with each four pneumatic tyres to drive across the road. The tyres of one of the shafts are directional controllable. All wheels are driven by the propulsion. The carriage is also provided with two shafts with each two train wheels with fixed orientation. These shafts are upward movable mounted, such that the lowest point of the running faces of the train wheels are below or above the lowest level of the running faces of the tyres. In the former position the carriage bears with the train wheels onto the ground while the tyres are lifted from the ground. In the latter position the carriage bears with the tyres onto the ground while the train wheels are lifted from the ground. On top of the carriage an around a vertical shaft pivotable platform bears, on top of which the cabin, the boom and the propulsion motor are present. The motor drives a hydraulic generator for the hydraulic control of the boom.

A first lorry is pivotably coupled to this vehicle. This first lorry is provided with two shafts with each two train wheels to run across a railway track. Above the train wheels a housing is mounted in which a source a hydraulic pressurised fluid and a control unit are present.

A second lorry is pivotably coupled to this first lorry. This second lorry is provided with two shafts with each two train wheels to run across a railway track. Above the train wheels a housing is mounted in which a combustion engine is mounted which is coupled with a generator to generate electricity. The generator supplies current to the source of hydraulic pressurised fluid, the control unit and the welding arc. The control unit controls the supply of hydraulic pressurised fluid and current from the first lorry to the equipment at the free end of the boom.

During activities to the track, the equipment for butt welding and/or different equipment, such as for measuring of and/or providing the stress free condition into the track, is mounted to the free end of the boom. The train, provided by the excavating machine, first and second lorry, rests onto the track for which a butt weld is made. The location of the butt weld is at the one side of the excavator, the first and second lorry are at the other side of the excavator. From the equipment mounted to the free end of the boom, electricity leads and hydraulic tubes extend uninterrupted along the boom, along the platform of the excavator and towards the first lorry. The hydraulic tubes are, through the control unit at the first lorry, connected to the source of hydraulic pressurised fluid at the first lorry. The electricity leads are connected to the control unit at the first lorry. From the control unit and the source of hydraulic fluid electricity leads extend to the second lorry to be connected to the electricity generator. These leads and tubes are supported spaced along their length to the components along which they extend, such as the boom, platform and first lorry.

Particularly this combination of conventional excavator and two lorries offers in an efficient manner the opportunity to work below the overhead leads supplying the current which is taken up by the train traffic through the pantograph for propulsion, while this work train can be put at the track at the location of an existing railway crossing, wherein the lorries can be supplied via the road by a truck that is able to, at the location of the crossing, locate them from its loading bay immediately in the track below the overhead leads, making use of an articulated lifting arm with which the lorry is lifted.

The lorries each have a weight of not more than 10,000 kg (10 ton) to be able to easily transport them across the road and to be able to lift them.

It will be appreciated that the invention mainly relates to providing maintenance to existing railways. The device to carry out the method is preferably at least partly designed as rail/road vehicle.

## Claims

1. Method wherein of an existing railway track a rail is severed in two, in mutual extension running, rails which pieces subsequently are united by welding their ends to each other, possibly after one of these pieces is partly or completely replaced by a new piece that is fixedly welded to the original piece (s), wherein a property of the rail is measured in situ which determines the mechanical stress in the rail, which data is used during re uniting of the rail by welding to bring back the original stress free condition, **characterized in that** the property of the rail is measured at the time of severing.

2. Method according to claim 1, wherein during severing a sensor of a measuring device engages the rail and reacts to the behaviour of the rail during severing to measure a property of the rail that determines the mechanical stress in the rail, preferably during severing two sensors engage the rail, each at both sides of the line of separation.

3. Method according to any of claims 1 or 2, wherein one takes account of changing environmental conditions, such as temperature, while the method is carried out, to guarantee that the stress free condition is brought back.

4. Method according to any of claims 1-3, wherein the rail is demounted across a predetermined length from its mounting to the foundation.

5. Method according to any of claims 1-4, wherein the work is carried out below the overhead leads supplying current to the train traffic.

6. Method according to any of claims 1-5, wherein a length part of the rail is temporarily brought in a curved shape, which curved shape is brought back to the original shape during uniting the rail by welding.

7. Method according to any of claims 1-6, wherein use is made of a work train supported by the track at which work is carried out, comprising an excavator designed as rail/road vehicle with articulated boom the spade of which is replaced by a the rail engaging pressing and welding unit; at the side of the excavator opposite the welding location a pivoting to the excavator coupled first wagon with rail wheels, a control unit and a source of pressurised fluid; at the side opposite the side of the excavator a to the first wagon coupled second wagon with rail wheels and a with a combustion engine coupled electrical generator supplies energy for the hydraulic propulsion of the to the welding unit belonging clamping unit which keeps the rail ends during welding pressed against each other and for the arc which is created by the welding unit.

8. Device configured to carry out the method according to any of claims 1-7, comprising a butt weld device having a first clamping unit and a second clamping unit, both designed to engage the rail on both sides of the weld and to press the rail ends with a predetermined force against each other, wherein the engagement locations of the first clamping unit to the rail are between those of the second clamping unit and comprising a measuring device having a sensor **characterized in that** said sensor is configured to during severing engaging the rail and reacting to the behaviour of the rail during severing to measure a property of the rail that determines the mechanical stress in the rail.

9. Device according to claim 8, comprising a display unit to show to the operator that the stress free condition is obtained.

10. Device according to claim 8 or 9, wherein the first and second clamping unit are provided with a master-slave control, wherein the first clamping unit provides the master.

## Patentansprüche

1. Verfahren, bei dem einer bestehenden Eisenbahn eine Schiene in zwei, in gegenseitiger Verlängerung laufende, Schienen durchtrennt wird, die Stücke anschließend vereinigt werden durch miteiander Verschweißen ihrer Enden, gegebenenfalls nach einer dieser Teile teilweise oder vollständig durch ein neues Stück, das fest mit dem / den Originalstück(en) verschweißt wird, ersetzt wird, wobei in situ einer Eigenschaft der Schiene gemessen wird, die die mechanische Spannung in der Schiene bestimmt, wobei diese Daten während des wieder Zusammenfügens der Schiene durch Schweißen verwendet werden, um den ursprünglichen spannungsfreien Zustand wiederherzustellen, **dadurch gekennzeichnet, dass** der Eigenschaft der Schiene zur Zeit von durchtrennen gemessen wird.

2. Verfahren nach Anspruch 1, wobei während durchtrennen eines Sensors eines Messgerätes zusammenwirkt mit der Schiene und reagiert auf das Verhalten der Schiene während durchtrennen um eine Eigenschaft der Schiene zu messen, die die mechanische Spannung in der Schiene bestimmt, vorzugsweise während durchtrennen wirken zwei Sensoren zusammen mit der Schiene, jeweils auf beiden Seiten der Trennlinie.

3. Verfahren nach einem der Ansprüche 1 oder 2, wobei man sich ändernden Umgebungsbedingungen berücksichtigt, wie Temperatur, während das Verfahren durchgeführt wird, um sicherzustellen, dass der spannungsfreie Zustand wiederherstellet wird.

4. Verfahren nach einem der Ansprüche 1-3, wobei die Schiene über eine vorgegebene Länge aus der Halterung auf das Fundament abmontiert wird.

5. Verfahren nach einem der Ansprüche 1 bis 4, wobei die Arbeit unter den oben liegenden Leitungen, die dem Zugverkehr Strom zuführen, ausgeführt wird.

6. Verfahren nach einem der Ansprüche 1-5, wobei eine Längeteil der Schiene vorübergehend in einer gekrümmten Form gebracht wird, welche gekrümmten Form zurück in die ursprüngliche Form gebracht wird, während der Schiene vereinigt wird durch Schweißen.

7. Verfahren nach einem der Ansprüche 1-6, wobei einer durch den Eisenbahn unterstützte Arbeitszuges verwendet wird, an welche Eisenbahn die Arbeit ausgeführt wurde, mit einem Bagger ausgeführt wie Schienen-/Straßenfahrzeug mit gelenkigen Ausleger von welche der Schaufel ersetzt war durch eine die schienen ergreifende Press- und Schweißeinheit; auf der der Schweißstelle gegenüberliegenden Seite des Bagger ein schwenkend mit dem Grabmaschine gekoppelter erster Wagen mit Schienenrädern, eine Steuereinheit und eine Druckfluidquelle; an der der Seite des Bagger gegenüberliegenden Seite ein mit dem ersten Wagen gekoppelter zweiter Wagen mit Schienenrädern und ein mit einem Verbrennungsmotor gekoppelter elektrischer Generator um Energie zu liefern für den hydraulischen Vortrieb der zu der Schweißeinheit gehörenden Schließeinheit, die die Schienenenden während Schweißen gegeneinander hält, und für den Lichtbogen, der von der Schweißeinheit erzeugt wird.

8. Gerät konfiguriert, um das Verfahren durchzuführen nach einem der Ansprüche 1-7, umfassend eine Stumpfschweißvorrichtung mit einer ersten Klemmeinheit und einer zweiten Klemmeinheit, die beide dazu ausgelegt sind, die Schiene auf beiden Seiten der Schweißnaht zu ergreifen und die Schienenenden mit einer vorbestimmten Kraft gegeneinander zu drücken, wobei die angriffsstellen der ersten Klemmeinheit zu der Schiene zwischen denen der zweiten Klemmeinheit positioniert sind und umfassend eine Messvorrichtung mit einem Sensor, **dadurch gekennzeichnet dass** der Sensor dazu eingerichtet ist, während des durchtrennen auf die Schiene anzugreifen und auf das Verhalten der Schiene während des durchtrennen zu reagieren, um eine Eigenschaft der Schiene zu messen, die die mechanische Spannung in der Schiene bestimmt.

9. Vorrichtung nach Anspruch 8, umfassend eine Anzeigeeinheit, um dem Bediener zu zeigen, dass der spannungsfreie Zustand erhalten wird.

10. Vorrichtung nach Anspruch 8 oder 9, wobei die erste und die zweite Klemmeinheit mit einer Master-Slave-Steuerung versehen sind, wobei die erste Klemmeinheit den Master bereitstellt.

## Revendications

1. Méthode appliquée à une voie ferrée existante dont un rail est divisé en deux rails qui se prolongent mutuellement, ces pièces étant ensuite réunies par soudage de leurs extrémités l'une à l'autre, éventuellement après remplacement partiel ou total de l'une de ces pièces par une nouvelle pièce soudée de manière fixe à la pièce d'origine, une propriété du rail est mesurée in situ qui détermine la contrainte mécanique dans le rail, les données sont utilisées lors de la réunion du rail par soudage pour ramener l'état initial sans contrainte, **caractérisé en ce que** la propriété est mesurée à le moment de divisé.

2. Procédé selon la revendication 1, dans lequel pendant sectionnement un capteur d'un dispositif de mesure s'engagent le rail et réagit au comportement du rail lors de la divisé du rail pour mesurer une propriété du rail qui détermine la contrainte mécanique dans le rail, de préférence deux les capteurs s'engagent le rail lors de la divisé, les capteurs engageant chacun le rail à des deux côtés de la ligne de séparation.

3. Procédé selon l'une quelconque des revendications 1 ou 2, dans lequel on compte tenu des changements de conditions environnementales, telles que la température, pendant la réalisation du procédé, pour garantir le retour de la condition sans contrainte.

4. Procédé selon l'une quelconque des revendications 1-3, dans lequel le rail est démonté à travers une longueur prédéterminée de son support à la fondation.

5. Procédé selon l'une quelconque des revendications 1 à 4, dans lequel le travail est effectué en dessous des fils aériens qui alimentent le trafic ferroviaire.

6. Procédé selon l'une quelconque des revendications 1-5, dans lequel une partie de la longueur du rail est temporairement donné une forme incurvée, dont la forme incurvée est ramené à la forme d' origine au cours de réunir le rail par soudage.

7. Procédé selon l'une quelconque des revendications 1-6, dans lequel on utile un train de travail qui est soutenu par le voie ferrée où le travail est effectué, quel train est pourvu d'un excavateur qui est conçu comme véhicule rail/route avec bras articulé, dans lequel la bêche est remplacée par une unité de pressage et de soudage qui engage le rail; au niveau du côté du excavateur en face de l'emplacement de soudage il y a un premier chariot avec des roues de chemin de fer qui est couplé à le excavateur de telle manière qu'il est capable de pivoter, une unité de commande et une source de fluide sous pression; au niveau du côté opposé au côté du excavateur, il y a un deuxième chariot avec des roues de chemin de fer qui est couplé à le premier chariot et qui est pourvue d'un moteur à combustion qui est couplé à un générateur électrique et la deuxième chariot fourniture énergie pour la propulsion hydraulique de l'au unité de soudage appartenant unité de serrage qui maintient les extrémités de rail pendant le soudage pressé contre l'autre, et pour l'arc qui est créé par l'unité de soudage.

8. Dispositif configuré pour mettre en oeuvre le procédé selon l'une quelconque des revendications 1 à 7, comprenant un dispositif de soudage bout à bout comportant une première unité de serrage et une seconde unité de serrage qui sont toutes deux conçues pour engager le rail des deux côtés de la soudure des extrémités de rail avec une force prédéterminée l'une contre l'autre, les emplacements d'engagement de la première unité de serrage sur le rail étant situés entre ceux de la seconde unité de serrage et il existe un dispositif de mesure comportant un capteur, **caractérisé en ce que** le capteur est configuré pour, lors de la séparation, engager le rail et réagir au comportement du rail pendant la séparation pour mesurer une propriété du rail qui détermine la contrainte mécanique dans le rail.

9. Dispositif selon la revendication 8, comprenant une unité d'affichage pour montrer à l'opérateur que la condition sans contrainte est obtenue.

10. Dispositif selon la revendication 8 ou 9, dans lequel les première et seconde unités de serrage sont munies d'une commande maître-esclave, dans lequel la première unité de serrage fournit le maître.
